# FASCICULE DE BREVET EUROPEEN

(11) **EP 2 689 490 B1**
(45) Date de publication et mention de la délivrance du brevet: **31.12.2014**
(21) Numéro de dépôt: 12709631.1
(22) Date de dépôt: 19.03.2012
(51) Int. Cl.: H01P 3/00, B82Y 30/00, H01P 1/10

(54) **COMPOSANT DE TYPE NANO-ELECTRO-MECHANICAL-SYSTEM RADIO-FREQUENCE (NEMS RF) COMPORTANT UN NANO-COMMUTATEUR A CONTACT AMELIORE**
BAUTEIL EINES NANOELEKTROMECHANISCHEN HOCHFREQUENZSYSTEM (RF NEMS) MIT EINEM NANOSCHALTER MIT VERBESSERTEM KONTAKT
RADIO-FREQUENCY NANOELECTROMECHANICAL SYSTEM (RF NEMS) COMPONENT COMPRISING A NANOSWITCH WITH AN IMPROVED CONTACT

(30) Priorité: 21.03.2011 FR 1100838
(43) Date de publication de la demande: 29.01.2014
(73) Titulaire: THALES, 92200 Neuilly-sur-Seine (FR)
(72) Inventeur: ZIAEI, Afshin, F-92170 Vanves (FR); LE BAILLIF, Matthieu, F-91400 Orsay (FR); XAVIER, Stéphane, F-77000 Vaux Le Penil (FR)
(74) Mandataire: Esselin, Sophie
(86) Numéro de dépôt international: PCT/EP2012/054759
(87) Numéro de publication internationale: WO 2012/126871

(56) Documents cités:
- US-A1- 2004 129 447
- US-A1- 2009 174 606

## Description

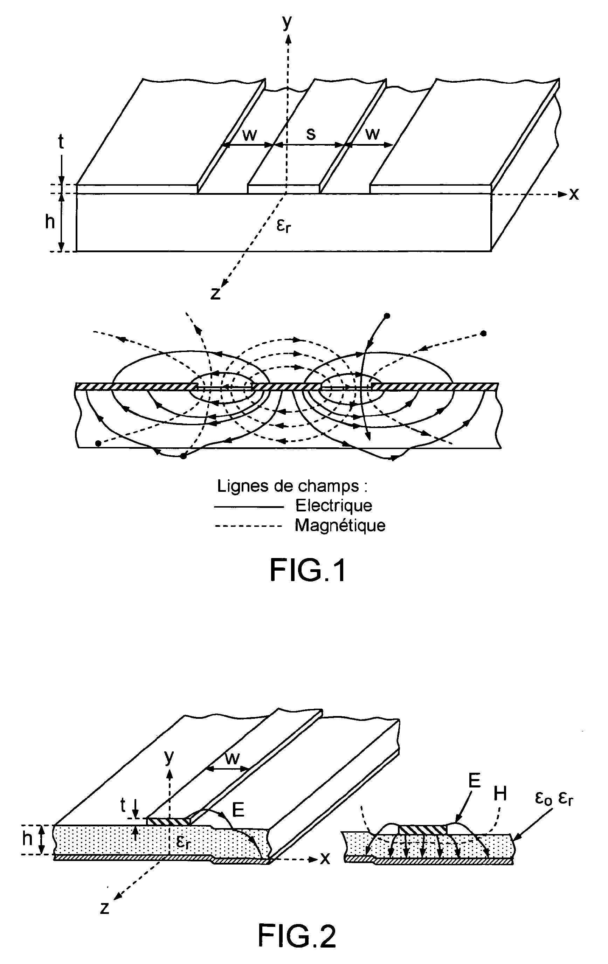

Le domaine de l'invention est celui des composants de type NEMS RF qui sont généralement des composants élaborés à partir de technologies de guides d'onde pour la micro-électronique, pouvant notamment être soit des lignes coplanaires comme représenté en figure 1, soit des lignes « microstrip » constituée d'une piste de transmission de largeur contrôlée, séparée d'un plan de masse conducteur par un matériau isolant à faibles pertes comme représenté en figure 2 , les lignes de champ électrique et les lignes de champ magnétique étant représentées sur l'ensemble de ces figures.

Afin de réaliser une fonction d'interrupteur RF il est nécessaire de pouvoir créer une très forte désadaptation locale de la ligne RF servant de support à la transmission du signal. Cette désadaptation jouant le rôle de barrage peut être créée de deux manières, soit en ouvrant la ligne RF comme un interrupteur série, faisant passer l'impédance caractéristique de la ligne de 50 Ohm à l'infinie, soit en la court-circuitant comme un interrupteur parallèle, faisant passer l'impédance caractéristique de la ligne de 50 Ohm à 0 Ohm. (II est question de court-circuit radio-fréquence dont le comportement est totalement différent d'un court-circuit en courant continu).

Le document de l'art antérieur US 2004/0129447 décrit une structure à nanotubes.

Le problème lorsque l'on veut réaliser des nano-commutateurs couramment appelés en terme anglo-saxons « nano-switch », c'est que l'on a généralement besoin de réaliser des contacts mettant en jeux des éléments dont au moins une des dimensions est d'échelle nanométrique, typiquement deux nanotubes. De ce fait, la fiabilité d'un tel contact est réduite et sa qualité moyenne très basse. Le cas idéal de deux nanotubes étant en contact le long d'une arrête de manière continue est très improbable. Cela réduit de fait le potentiel de ces « nano-switch ».

C'est pourquoi et dans ce contexte, la présente invention a pour objet un composant comportant une nouvelle architecture de micro-commutateur dans laquelle, le nanotube de carbone vient en contact directement avec une ligne métallique, ou bien avec un diélectrique recouvrant cette dernière.

Plus précisément, l'invention a pour objet un composant RF comprenant au moins une ligne RF coplanaire avec une surface métallique à la surface d'un substrat et une structure de nano-commutateur située entre ladite ligne coplanaire et la surface métallique, la ligne RF et la surface métallique étant parallèle entre elles selon une première direction, la ligne RF et la surface métallique comprenant des éléments latéraux perpendiculaires à ladite première direction, caractérisé en ce que :
- un élément latéral de la ligne RF coopère avec au moins un élément latéral de la surface métallique qui comporte une série de nanotubes ou nanofils, via une commutation mettant en contact direct la série de nanotubes ou de nanofils avec l'élément latéral de ladite ligne RF ;
- ladite structure de commutateur comportant en outre au moins une électrode de commutation à la surface dudit substrat, permettant de contacter ladite série de nanotubes ou nanofils audit élément latéral de ladite ligne RF.

Selon une variante de l'invention, l'élément latéral de ladite ligne RF est recouvert d'une première couche de diélectrique de manière à assurer un contact ohmique au niveau du nano-commutateur.Selon une variante de l'invention, ladite première couche diélectrique est recouverte d'une couche métallique constituant une électrode flottante, de manière à constituer une capacité intégrée.

Selon une variante de l'invention, ladite première couche diélectrique est recouverte d'une couche métallique constituant une électrode flottante et ladite couche métallique est en outre recouverte d'une seconde couche de diélectrique, permettant d'assurer un contact capacitif entre la série de nanotubes ou nanofils et la capacité intégrée.

L'invention sera mieux comprise et d'autres avantages apparaîtront à la lecture de la description qui va suivre donnée à titre non limitatif et grâce aux figures annexées parmi lesquelles :
- la figure 1 illustre un exemple de composant selon l'art connu élaboré à partir de guide d'onde pour la micro-électronique, de type ligne coplanaire ;
- la figure 2 illustre un exemple de composant selon l'art connu élaboré à partir de guide d'onde pour la micro-électronique de type ligne « microstrip » ;
- les figures 3a, 3c et 3b illustrent respectivement une vue de dessus, une vue de dessus agrandie et une vue en coupe d'un premier exemple de composant selon l'invention ;
- les figures 4a et 4b illustrent le fonctionnement d'un composant selon l'invention, dans un état « OFF » et un état « ON » de commutation ;
- la figure 5 illustre un second exemple de composant selon l'invention ;
- la figure 6 illustre un troisième exemple de composant selon l'invention ;
- la figure 7 illustre un quatrième exemple de composant selon l'invention.

De manière générale, le composant de la présente invention comporte une ligne coplanaire RF susceptible d'être connectée à un ou plusieurs plans de masse via un ou plusieurs nano-commutateurs. La nouvelle architecture proposée dans la présente invention comporte un nano-commutateur comprenant au moins une série de nanotubes pouvant avantageusement être des nanotubes appartenant au plan de masse et pouvant commuter et ainsi être mis en contact direct avec la ligne coplanaire RF.

Les nanotubes peuvent avantageusement être des nanotubes de carbone de type MWCNTs, intéressants pour leurs propriétés métalliques.

De manière générale, les nanotubes de carbone sont des structures tubulaires très minces formées par un ou plusieurs feuillets de graphite enroulés sur eux-mêmes. Les nanotubes de carbone peuvent être produits à haute température supérieure à 1000°C par l'application d'une décharge électrique entre deux électrodes de graphite ou à moyenne température inférieure à 1000°C par PECVD (Plasma Enhanced Chemical Vapor Déposition). En général, les nanotubes de carbone sont classés en deux catégories : les nanotubes monofeuillets, ou SWCNT, composés d'une structure tubulaire formée d'un feuillet de graphite enroulé sur lui-même, et qui se distinguent des nanotubes multifeuillets ou MWCNT, qui peuvent être considérés comme formés de plusieurs nanotubes SWCNT concentriques.

### Premier exemple de composant RF selon l'invention :

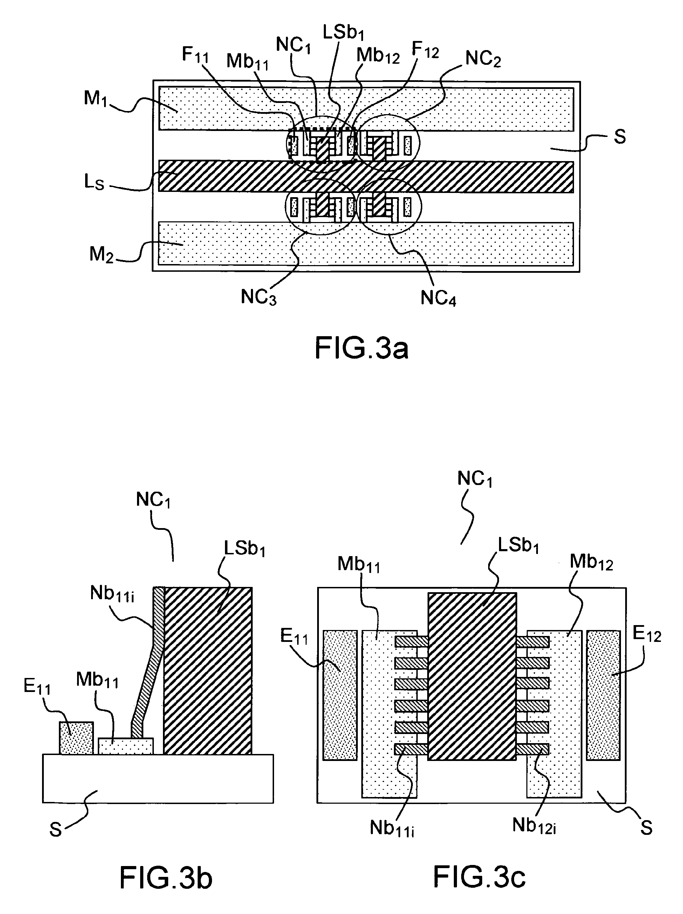

Le composant comprend de manière classique une ligne coplanaire RF, Ls, réalisée à la surface d'un substrat S et susceptible d'être reliée à deux plans de masse M₁ et M₂ par l'intermédiaire de nano-commutateurs NC₁, NC₂, NC₃ et NC₄ comme représenté en figure 3a.

Chaque nano-commutateur comporte des bras latéraux dits de plans de masse (par exemple des bras M_{b11} et M_{b12} appartenant au plan de masse M₁), un bras latéral dit de ligne (par exemple le bras Ls_{b1}) appartenant à la ligne coplanaire RF et des électrodes de commande (E₁₁, E₁₂).

En outre, les bras latéraux de plan de masse comportent en surface des séries de nanotubes capables de commuter dans une position permettant d'assurer la connection électrique entre le plan de masse et la ligne coplanaire RF, les nanotubes rentrant en contact direct avec les bras dits de ligne RF.

La figure 3b illustre une vue en coupe du nano-commutateur NC₁ mettant en évidence le contact électrique pouvant être assuré entre les nanotubes Nb₁₁ᵢ appartenant à la série de nanotubes à la surface du bras de plan de masse M_{b11} et le bras de ligne coplanaire Ls_{b1}.

La figure 3c est une vue de dessus agrandie du nano-commutateur NC₁ illustrant les deux bras latéraux des deux plans de masse, M_{b11} et M_{b12} pouvant être mis en contact avec le bras Ls_{b1} via deux séries de nanotubes Nb₁₁ᵢ et Nb₁₂ᵢ et deux électrodes de commande E₁₁ et E₁₂.

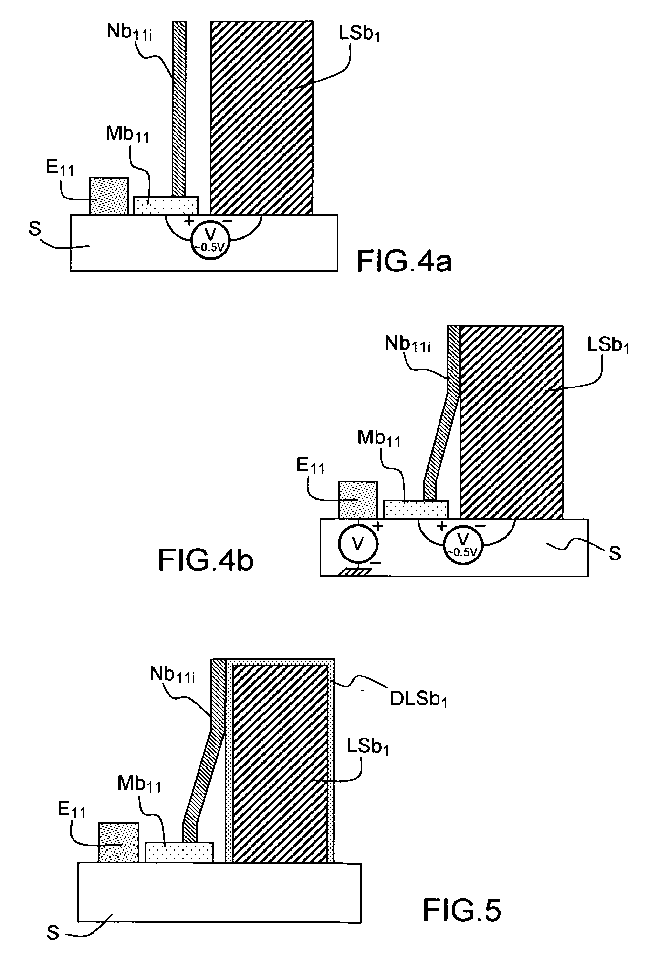

Les figures 4a et 4b illustrent plus en détails le procédé de commande dudit nano-commutateur NC₁ et ce en comportement de type shunt. En l'absence de tension portée sur l'électrode de commande E₁₁, la série de nanotubes Nb₁₁ᵢ n'est pas activée pour venir rentrer en contact avec le bras Ls_{b1}.

En effet et ce de manière générale, dans la mesure où il est impossible d'actionner les nanotubes en les polarisant fortement de manière directe, on applique une faible polarisation entre les nanotubes et le bras de la ligne métallique vers laquelle on veut les voir commuter puis on applique un potentiel du même signe que les nanotubes sur l'électrode d'activation afin de pousser les nanotubes vers la ligne métallique.

Dans le cas présent du switch NEMS RF, du fait du passage d'un signal RF dans la ligne, les nanotubes sont naturellement polarisés. Il n'est donc pas nécessaire de prévoir un circuit de polarisation supplémentaire afin de pouvoir les actionner. Le signal remplit le rôle d'une polarisation à 0.5V

### Second exemple de composant RF selon l'invention :

Le composant de la présente invention peut également permettre un contact capacitif assuré entre les plans de masse et la ligne coplanaire.

Il est alors prévu une couche supplémentaire de matériau diélectrique DL_{Sb1} à la surface de l'ensemble du bras L_{Sb1} de la ligne coplanaire, la série de nanotubes Nb₁₁ᵢ pouvant basculer en contact avec cette couche DL_{Sb1} comme illustré en figure 5.

### Troisième exemple de composant RF selon l'invention :

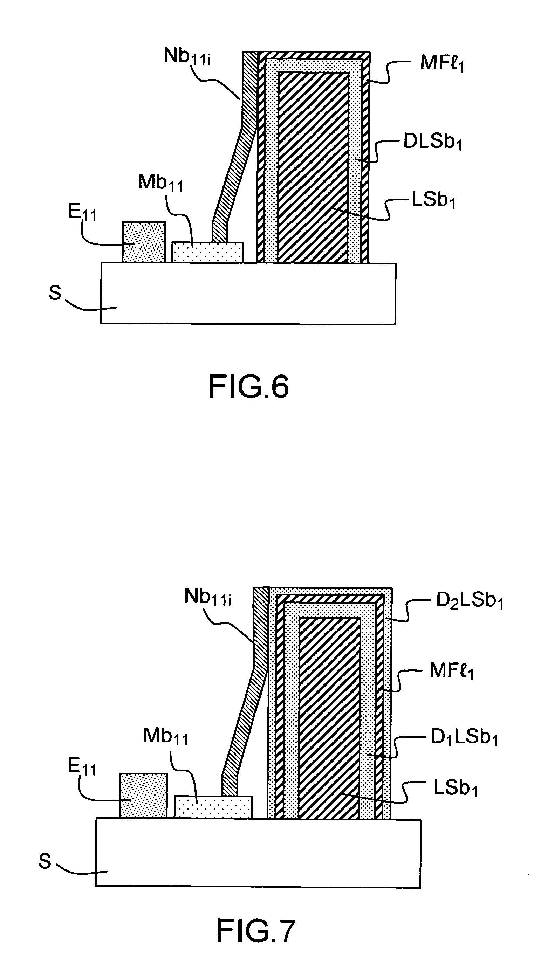

Le composant de la présente invention peut comprendre également une capacité à commuter, directement intégrée au switch NEMS RF comme illustré en figure 6. Pour cela, le composant comprend au niveau du bras LS_{bi} relié à la ligne coplanaire RF, l'empilement de couches suivantes permettant d'assurer cette fonction de capacité intégrée :
- une couche de diélectrique DL_{Sb1};
- une couche de matériau conducteur MF_{I1}, capable d'assurer une fonction d'électrode flottante.
- La valeur de la capacité à commuter est déterminée directement par l'épaisseur de la couche intermédiaire de diélectrique DL_{Sb1} et par la surface de recouvrement de la partie flottante en contact ohmique.

### Quatrième exemple de composant RF selon l'invention :

Le composant de la présente invention peut également comprendre un contact capacitif entre la série de nanotubes Nb₁₁ et une capacité intégrée audit composant tel que celui décrit dans le troisième exemple. Pour cela et comme illustré en figure 7, il peut être prévu de réaliser l'empilement de couches suivants à la surface du bras Ls_{b1} :
- une première couche de diélectrique D₁L_{Sb1} ;
- une couche de matériau conducteur MF_{I1} ;
- une seconde couche de diélectrique D₂L_{Sb1}

## Revendications

1. Composant RF comprenant au moins une ligne RF (Ls) coplanaire avec une surface métallique (M₁, M₂) à la surface d'un substrat (S) et une structure de nano-commutateur (NC₁, NC₂, NC₃, NC₄) située entre ladite ligne coplanaire et la surface métallique, la ligne RF et la surface métallique étant parallèle entre elles selon une première direction, la ligne RF et la surface métallique comprenant des éléments latéraux (L_{sb1}, L_{sb2}, M_{b11}, M_{b12}, M_{b21}, M_{b22}) perpendiculaires à ladite première direction, **caractérisé en ce que** :
- un élément latéral (Ls_{b1}, Ls_{b2}) de la ligne RF coopère avec au moins un élément latéral de la surface métallique (M_{b11}, M_{b12}, M_{b21}, M_{b22}) qui comporte une série de nanotubes ou nanofils (Nb₁₁ᵢ, N₁₂ᵢ), via une commutation mettant en contact direct la série de nanotubes ou de nanofils avec l'élément latéral de ladite ligne RF ;
- ladite structure de nano-commutateur comportant en outre au moins une électrode de commutation à la surface dudit substrat, permettant de contacter ladite série de nanotubes ou nanofils audit élément latéral de ladite ligne RF.

2. Composant RF selon la revendication 1, **caractérisé en ce que** l'élément latéral de ladite ligne RF est recouvert d'une première couche de diélectrique de manière à assurer un contact ohmique au niveau du nano-commutateur.

3. Composant RF selon la revendication 2, **caractérisé en ce que** ladite première couche diélectrique est recouverte d'une couche métallique (MF_{I1}) constituant une électrode flottante, de manière à constituer une capacité intégrée.

4. Composant RF selon la revendication 1, **caractérisé en ce que** ladite première couche diélectrique est recouverte d'une couche métallique (MF_{I1}) et **en ce que** ladite couche métallique est en outre recouverte d'une seconde couche de diélectrique (DL₂s_{b1}), permettant d'assurer un contact capacitif entre la série de nanotubes ou nanofils et la capacité, de manière à assurer un contact capacitif entre la capacité intégrée et les séries de nanotubes.

## Patentansprüche

1. RF-Komponente, die wenigstens eine RF-Leitung (Ls) koplanar mit einer Metallfläche (M₁, M₂) auf der Fläche eines Substrats (S) und eine Nanoschalterstruktur (NC₁, NC₂, NC₃, NC₄) umfasst, die sich zwischen der koplanaren Leitung und der Metallfläche befindet, wobei die RF-Leitung und die Metallfläche parallel zueinander in einer ersten Richtung sind, wobei die RF-Leitung und die Metallfläche seitliche Elemente (L_{sb1}, L_{sb2}, M_{b11}, M_{b12}, M_{b21}, M_{b22}) senkrecht zu der ersten Richtung umfassen, **dadurch gekennzeichnet, dass**:
ein seitliches Element (L_{sb1}, L_{sb2}) der RF-Leitung mit wenigstens einem seitlichen Element der Metallfläche (M_{b11}, M_{b12}, M_{b21}, M_{b22}) zusammenwirkt, die eine Serie von Nanoröhrchen oder Nanodrähten (Nb_{11i,} Nb₁₂ᵢ) umfasst, über eine Schaltung, die die Serie von Nanoröhrchen oder Nanodrähten in direkten Kontakt mit dem seitlichen Element der RF-Leitung bringt;
wobei die Nanoschalterstruktur ferner wenigstens eine Schaltelektrode auf der Oberfläche des Substrats umfasst, so dass die Serie von Nanoröhrchen oder Nanodrähten mit dem seitlichen Element der RF-Leitung in Kontakt kommen kann.

2. RF-Komponente nach Anspruch 1, **dadurch gekennzeichnet, dass** das seitliche Element der RF-Leitung mit einer ersten dielektrischen Schicht beschichtet ist, um einen ohmschen Kontakt am Nanoschalter zu erzielen.

3. RF-Komponente nach Anspruch 2, **dadurch gekennzeichnet, dass** die erste dielektrische Schicht mit einer Metallschicht (MF₁₁) beschichtet ist, die eine schwebende Elektrode bildet, um einen integrierten Kondensator zu bilden.

4. RF-Komponente nach Anspruch 1, **dadurch gekennzeichnet, dass** die erste dielektrische Schicht mit einer Metallschicht (MF₁₁) beschichtet ist, und dadurch, dass die Metallschicht auch mit einer zweiten dielektrischen Schicht (DL_{2Sb1}) zum Erzeugen eines kapazitiven Kontakts zwischen der Serie von Nanoröhrchen oder Nanodrähten und dem Kondensator beschichtet ist, um einen kapazitiven Kontakt zwischen dem integrierten Kondensator und der Serie von Nanoröhrchen zu erzielen.

## Claims

1. An RF component comprising at least one RF line (Ls) coplanar with a metal surface (M₁, M₂) on the surface of a substrate (S) and a nanoswitch structure (NC₁, NC₂, NC₃, NC₄) located between said coplanar line and said metal surface, said RF line and said metal surface being parallel to each other in a first direction, said RF line and said metal surface comprising lateral elements (L_{sb1}, L_{sb2}, M_{b11}, M_{b12}, M_{b21}, M_{b22}) perpendicular to said first direction, **characterised in that**:
a lateral element (L_{sb1}, L_{sb2}) of said RF line cooperates with at least one lateral element of said metal surface (M_{b11}, M_{b12}, M_{b21}, M_{b22}), which comprises a series of nanotubes or nanowires (Nb₁₁ᵢ, Nb₁₂ᵢ), via a switching operation that places said series of nanotubes or nanowires in direct contact with said lateral element of said RF line;
said nanoswitch structure further comprising at least one switching electrode on the surface of said substrate, which allows said series of nanotubes or nanowires to make contact with said lateral element of said RF line.

2. The RF component according to claim 1, **characterised in that** said lateral element of said RF line is coated with a first dielectric layer so as to provide ohmic contact at the nanoswitch.

3. The RF component according to claim 2, **characterised in that** said first dielectric layer is coated with a metal layer (man) forming a floating electrode so as to form an integrated capacitor.

4. The RF component according to claim 1, **characterised in that** said first dielectric layer is coated with a metal layer (MF₁₁) and **in that** said metal layer is also coated with a second dielectric layer (DL_{2Sb1}) for providing a capacitive contact between said series of nanotubes or nanowires and said capacitor, in order to provide a capacitive contact between said integrated capacitor and said series of nanotubes.
